(19)

Europäisches Patentamt
European Patent Office
Office européen des brevets

(11) **EP 4 585 905 A1**

(12) **EUROPEAN PATENT APPLICATION**

(43) Date of publication:
16.07.2025 Bulletin 2025/29

(21) Application number: 24151398.5

(22) Date of filing: 11.01.2024

(51) International Patent Classification (IPC):
*G01N 21/03* (2006.01)    *G01N 21/05* (2006.01)
*G01N 21/17* (2006.01)    *G01N 21/21* (2006.01)
*G01N 21/3504* (2014.01)    *G01N 21/3577* (2014.01)
*G01N 21/3581* (2014.01)    *G01N 21/359* (2014.01)
*G01N 21/35* (2014.01)

(52) Cooperative Patent Classification (CPC):
**G01N 21/05; G01N 21/0332;** G01N 21/0303;
G01N 21/3504; G01N 21/3577; G01N 21/3581;
G01N 21/359; G01N 2021/0396; G01N 2021/1725;
G01N 2021/215; G01N 2021/3595

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Max-Planck-Gesellschaft zur
Förderung der
Wissenschaften e.V.
80539 München (DE)**

(72) Inventors:
• **Maiti, Kiran Sankar**
  **85748 Garching (DE)**
• **Huber, Marinus**
  **85748 Garching (DE)**
• **Pupeza, Ioachim**
  **85748 Garching (DE)**
• **Krausz, Ferenc**
  **85748 Garching (DE)**

(74) Representative: **v. Bezold & Partner
Patentanwälte - PartG mbB
Ridlerstraße 57
80339 München (DE)**

(54) **SAMPLE RECEPTACLE APPARATUS FOR ARRANGING A FLUID SAMPLE IN A BEAM PATH OF MEASURING RADIATION, AND MEASURING APPARATUS AND METHOD FOR A SPECTROSCOPIC INVESTIGATION OF A SAMPLE**

(57)    A sample receptacle apparatus (100) for arranging a fluid sample (1) in a beam path (2) of measuring radiation (3) in a gas-tight measuring apparatus (200), comprises a sample cell (10) having plane, plate-shaped cell windows (11) with a spacing therebetween, wherein the sample cell (10) is configured for accommodating the sample (1) in the spacing between the cell windows (11), and a cell holder device (20) having a cell support body (21), a first coupling section (22) and a second coupling section (23), wherein the cell support body (21) is configured for accommodating the sample cell (10) and for setting a temperature of the sample cell (10), the first and second coupling sections (22), (23) are configured for a gas-tight coupling of the cell holder device (20) with a closed container device (240) of the measuring apparatus (200), and the cell holder device (20) provides a beam passage (4) along a longitudinal direction z through the first coupling section (22), the cell support body (21) with the sample cell (10), and the second coupling section (23), wherein the sample cell (10) is arranged in the beam passage (4) such that a normal of at least one of the cell windows (11) deviates from the longitudinal direction (z) of the beam passage (4). Furthermore, a measuring apparatus for a spectroscopic investigation of a sample, including the sample receptacle apparatus (100) and a spectroscopic measuring method are described.

FIG. 1

## Description

Field of the invention

The invention relates to a sample receptacle apparatus, including a sample cell, in particular a flow cell, and being configured for arranging a fluid sample in a beam path of measuring radiation in a measuring apparatus, in particular in an evacuated measuring apparatus. Furthermore, the invention relates to a measuring apparatus for a spectroscopic investigation of a sample, in particular by field-resolved spectroscopy, wherein the measuring apparatus includes the sample receptacle apparatus. Furthermore, the invention relates to a spectroscopic measuring method for a spectroscopic investigation of a sample, wherein the sample receptacle apparatus and the measuring apparatus are employed. Applications of the invention are available in the field of spectroscopic measurements, in particular with pulsed broadband measuring radiation.

Prior art

In the present specification, reference is made to the following prior art illustrating the technical background of the invention:

[1] A. Apolonski et al. "Towards a standard operating procedure for revealing hidden volatile organic compounds in breath: the Fourier-transform IR spectroscopy case" in "Appl. Opt." 60(14):4217-4224, May 2021;
[2] H. Yang et al. "Obtaining information about protein secondary structures in aqueous solution using Fourier transform IR spectroscopy" in "Nat Protoc." 10(3):382-396, 2015;
[3] I. Pupeza et al. "Field-resolved infrared spectroscopy of biological systems" in "Nature" 577:52-59, 2020;
[4] US 2020/0033259 A1;
[5] US 2018/0003623 A1;
[6] US 2019/0056312 A1;
[7] WO 2004/036193 A1;
[8] T. P. Butler et al. "Watt-scale 50-MHz source of single-cycle waveform-stable pulses in the molecular fingerprint region" in "Opt. Lett." 44(7):1730-1733, April 2019;
[9] T. P. Butler et al. "Multi-octave spanning, watt-level ultrafast midinfrared source" in "Journal of Physics: Photonics" 1(4):044006, Oct 2019;
[10] J. Xu et al. "Three-octave terahertz pulses from optical rectification of 20 fs, 1 $\mu$m, 78 MHz pulses in GaP" in "Journal of Physics B: Atomic, Molecular and Optical Physics" 51(15):154002, jul 2018;
[11] K. S. Maiti "Broadband two dimensional infrared spectroscopy of cyclic amide 2-pyrrolidinone" in "Phys. Chem. Chem. Phys." 17:24998-25003, 2015;
[12] D. J. Rowe et al. "Complex refractive index spectra of whole blood and aqueous solutions of anticoagulants, analgesics and buffers in the mid-infrared" in "Sci. Rep." 7:7356, 2017; and
[13] M. Huber et al. "Optimum sample thickness for trace analyte detection with field-resolved infrared spectroscopy" in "Analytical Chemistry" 92(11):7508-7514, 2020. PMID: 32352273.

It is generally known that chemical and biological activities of bio-fluids (in particular body fluids occurring in biological organisms) are triggered by fast molecular conformational changes in the condensed phase. Monitoring the molecular constitution and/or conformational changes of molecules in bio-fluids not only provides information about the internal chemistry of the body, but also helps to detect diseases, like cancer, in bio-fluids, or to quantify clinically relevant parameters in bio-fluids, such as blood serum. The molecular structure and dynamics of biologically relevant molecules in liquid or in gaseous phase can be monitored by infrared spectroscopy.
In general, known infrared-based bio-fluid studies are performed using Fourier transform infrared spectrometers (FTIR) provided with thermal light sources (see e.g., [1]). However, the moderate power of the thermal light source and the low sensitivity of mid-infrared detectors limit the maximum spectroscopic sensitivity that can be achieved. This problem is further enhanced by the water-content of biological samples, because water is a strong absorber in the mid-infrared (MIR) wavelength range. Therefore, in the majority of FTIR applications for investigating bio-fluids, the thickness of the sample to be examined is limited to a few $\mu$m only (see e.g., [2]). This implies practical problems, since sample cells with such small layer thicknesses easily clog, especially for biological samples containing large proteins. In addition, due to strong broadband absorption bands of water around 580 cm$^{-1}$, 1600 cm$^{-1}$ and 3390 cm$^{-1}$, a significant amount of valuable information from biological molecules, like metabolites, may be lost or difficult to access from the water absorption spectral region.
The above limitations of FTIR can be overcome by field-resolved spectroscopy (FRS) (see e.g., [3] to [5]). FRS is based on exciting the sample with broadband ultrashort light pulses and monitoring a sample response in temporal isolation from the excitation pulse. In particular, molecular vibrations can be excited impulsively and the resonant molecular response can be viewed temporally separated from the excitation pulse. This allows the measurement of molecular information with a reduced perturbing influence of the excitation pulse and improved signal-to-noise ratio (SNR). Furthermore, the FSR measurement allows for scalability of the excitation power, which in turn provides an increased measurement sensitivity (see e.g., [3]).

In order to exploit the full potential of FRS, it is crucial to use sample cells specifically adapted for this purpose. According to practical tests, typical commercially available cuvettes for FTIR spectroscopy meet the specific requirements of FRS in a restricted manner only. The choice of cell window material appears to be crucial for the optimal performance of FRS. A prerequisite for this is the use of a sample cell which adds as little dispersion as possible to the excitation pulse. This can be achieved either by compensating the resulting material dispersion with additional dispersive mirrors, or by using a measurement cuvette with minimal dispersion right from the start (see [4]).

Furthermore, in absorption spectroscopy, the sample cuvette usually is placed with cuvette walls perpendicular or close to perpendicular to the incident laser beam (see [11]). In this case, a back-reflection, which is generated at the sample-window interface of the cuvette, travels to the same direction as the laser beam and may reach the detector. Due to the back-reflection, the transmission of the cuvette is reduced and the detector signal is impaired by interference effects. For maximizing light transmission through the cuvette, it has been proposed to provide an antireflection coating on the cuvette or to place the cuvette under the Brewster angle relative to the incident laser beam (see [4]). However, antireflection coatings may have a limited effect in small spectral ranges only and placing the cuvette under the Brewster angle may result in disturbing total reflection effects as described below.

Another limitation of the FRS application may result from the use of an evacuated measuring apparatus. As FRS is based on exciting the sample with broadband ultrashort excitation light pulses with a centre wavelength in the MIR range, the excitation light may be created and relayed to the sample and the sample response may be relayed to a detector in a vacuum environment. Accordingly, interactions of the excitation light in particular with water vapour in atmosphere may be excluded. While vacuum tight sample cells are available, it is still challenging to employ and adjust them in the vacuum environment in a routine laboratory process. For instance, exchanging or even only adjusting a sample cell in the inner space of an evacuated container, e.g., for investigating another type of sample, requires time consuming venting the complete vacuum system, evacuating the vacuum system after exchanging the sample cell and adjusting the whole optical setup after evacuating the vacuum system. Equal problems may occur when a sample cell is adjusted in a closed container filled with an inert gas.

Sample cells for FTIR spectroscopic applications are described e.g., in [6] or [7]. The sample cell of [6] is a small volume (about 1 μ!) cuvette provided with a sample delivery system, infrared analyser, and chemical columns, in particular for measurements with non-organic samples. It has limitations in terms of setting measuring conditions, like temperature, for biological samples. The sample cell of [7] is built with ZnSe cell windows and an electrical thermal stabilization device, so that it is compatible with biological samples. The sample cells of [6] or [7] can be employed for FSR, but they suffer from the above practical limitations, in particular in relation to integrating them into a vacuum system.

Objective of the invention

The objective of the invention is to provide an improved sample receptacle apparatus, including a sample cell, for arranging a fluid sample in a beam path of measuring radiation, e.g., in an evacuated measuring apparatus, being capable of avoiding limitations of conventional techniques. The sample receptacle apparatus is to be improved in particular in relation to integration into a closed environment, like a vacuum environment, adjustment relative to the excitation radiation, reduction of effects on the excitation radiation and/or reduction of back-reflection and/or interference effects. Furthermore, the objective of the invention is to provide an improved measuring apparatus and/or method for a spectroscopic investigation of a sample, in particular by field-resolved spectroscopy, being capable of avoiding limitations of conventional techniques, in particular being capable of spectroscopic measurements with improved signal-to-noise ratio and/or reduced adjustment efforts.

Summary of the invention

These objectives are correspondingly solved by a sample receptacle apparatus, a measuring apparatus and/or a spectroscopic measuring method comprising the features of the independent claims, respectively. Preferred embodiments and applications of the invention arise from the dependent claims.

According to a first general aspect of the invention, the above objective is solved by a sample receptacle apparatus, being configured for arranging a fluid sample in a beam path of measuring radiation in a gas-tight, e.g., evacuated, measuring apparatus and comprising a sample cell having plane, plate-shaped cell windows with a spacing therebetween, wherein the sample cell is configured for accommodating the sample in the spacing between the cell windows.

According to the invention, the sample receptacle apparatus further comprises a cell holder device having a cell support body, a first coupling section and a second coupling section, wherein the cell support body is configured for accommodating the sample cell and for setting a temperature of the sample cell. Furthermore, the first and second coupling sections are configured for a gas-tight coupling of the cell holder device with an closed, e.g., evacuable, container device of the measuring apparatus, and the cell holder device provides a beam passage, in particular beam passage of measuring and sample response radiation involved in the process of measuring radiation, along a longitudinal direction through the first coupling section, the cell support body with the sample cell, and the second coupling section, wherein the sample cell is arranged in the beam passage such that a normal (90° direction) of at least one of the cell windows, preferably on an irradiation side of the sample cell, deviates from the longitudinal direction of the beam passage.

According to a second general aspect of the invention, the above objective is solved by a measuring apparatus, being configured for a spectroscopic investigation of a sample, comprising an irradiation source device, preferably a pulsed laser source, being arranged for creating measuring radiation, a detector device being arranged for detecting sample radiation resulting from an interaction of the measuring radiation with the sample to be investigated, an optical set-up including a plurality of optical elements spanning a beam path from the irradiation source device to the detector device, a closed container device being arranged for accommodating at least the optical set-up in gas-tight manner, and the sample receptacle apparatus according to the first general aspect of the invention or an embodiment thereof, wherein the sample receptacle apparatus is coupled with the closed container device such that the measuring radiation is capable of irradiating the sample in the sample cell and the detector device is capable of collecting the sample radiation. Preferably, the measuring apparatus may be configured for executing an FRS measurement. Alternatively, the measuring apparatus may be configured for executing an FTIR measurement. Preferably, the measuring radiation (or: excitation light) may be a sequence of polarized pulsed laser pulses. The sample radiation (or sample response) may be a sequence of response pulses created by the sample in response to the excitation with the measuring radiation.

According to a third general aspect of the invention, the above objective is solved by a spectroscopic measuring method for a spectroscopic investigation of a sample, wherein the measuring apparatus according to the second general aspect of the invention or an embodiment thereof is used, including the sample receptacle apparatus according to the first general aspect of the invention or an embodiment thereof. The spectroscopic measuring method comprises the steps of providing the sample in the sample cell of the sample receptacle apparatus, irradiating the sample with measuring radiation, and detecting sample radiation resulting from an interaction of the measuring radiation with the sample. Preferably, the spectroscopic measuring method includes a step of adjusting the longitudinal direction of the beam passage of the cell holder device relative to the beam path extending through the beam passage.

The sample cell (or: cuvette) may be a container providing a sample layer with a thickness according to the spacing between the cell windows being arranged at two opposite sides of the container. The cell windows are exposed on both opposite sides of a support frame, so that a cell section of the beam passage extends through the cell windows and the spacing therebetween, including the sample during measurement. The sample cell is adapted for accommodating a fluid sample, which generally may comprise a sample in a liquid state, or in a gaseous or vaporous state, or as droplets, like an aerosol.

The beam passage through the sample receptacle apparatus is the portion being capable of transmitting measuring radiation (excitation light) and/or sample response light. The beam path is the path of the excitation light and/or sample response light, as defined by the setting of the measuring apparatus, in particular along the beam passage through the sample receptacle apparatus.

The cell support body of the cell holder device is a solid component including a receptacle section for placing the sample cell within the cell support body. The sample cell being arranged in the receptacle section is exposed along the beam passage through the sample receptacle apparatus. Preferably, the cell support body may have a tube shape with a longitudinal axis of the tube defining the beam passage direction and providing the longitudinal direction of the beam passage.

The sample receptacle apparatus is configured for arranging the fluid sample in the beam path of measuring radiation/sample response radiation in the gas-tight measuring apparatus. The measurement may be executed in vacuum or in an inert gas. The inert gas preferably may have a refractive index equal or near to 1 (deviation from 1 neglectable for the measurement). Preferably, the inert gas may comprise a dry gas, e.g., Ne or Ar, in particular being free of water vapour. Accordingly, the gas-tight measuring apparatus comprises a measuring apparatus which may be evacuated or filled with the inert gas and which is gas-tight relative to the surrounding atmosphere. The inert gas may be included in the measuring apparatus at atmospheric pressure or a reduced or increased pressure compared with atmospheric pressure. In particular due to the gas-tight configuration, the vacuum or inert gas filling is kept during the measurement.

The gas-tight measuring apparatus includes the closed container device to which the cell holder device may be coupled. Again, the term "closed" refers to the characteristic that the container device may be evacuated or filled with the inert gas, and it is gas-tight relative to the surrounding atmosphere. The cell support body supporting the sample cell preferably may be evacuable and/or configured for accommodating the inert gas when arranged in the gas-tight measuring apparatus and coupled with the closed container device.

The temperature of the cell support body may be adjustable. Due to a thermal contact of the sample cell with the cell support body, the temperature of the sample cell can be set by adjusting the temperature of the cell support body. The cell support body provides a heat exchanger, wherein the temperature of the sample cell is set via the cell support body. For obtaining an efficient heat transfer, the receptacle section and the sample cell preferably may contact each other via contact areas.

Preferably, the first and second coupling sections of the cell holder device may be arranged at opposite sides of the cell support body for the gas-tight coupling of the cell holder device with the evacuable container device of the measuring apparatus. Particularly preferred, the first and second coupling sections may comprise gas-tight flanges, like e.g., vacuum flanges. When coupled with the container device, the cell holder device may be evacuable via at least one of the first and second coupling sections, or an inert gas may by introduced into the cell holder device via at least one of the first and second coupling sections.

Advantageously, the sample receptacle apparatus including the inventive combination of the sample cell with the cell holder device substantially facilitates an integration of the sample cell into a gas-tight system, in particular in the closed container device of the measuring apparatus. The sample receptacle apparatus is configured for an integration into the container device, in particular into a container wall construction thereof. Accordingly, an access to the sample is facilitated, and the sample receptacle apparatus allows the provision of measures for facilitating an evacuation of or inert gas introduction into the system and/or for exchanging the sample receptacle apparatus without a need for venting the whole system.

Furthermore, placing the sample cell in the cell holder device improves an adjustment of the sample cell relative to the excitation radiation. The cell holder device may be designed for precisely setting the beam passage through the sample cell. The cell holder device even may be adjustable as outlined below, so that the setting of the beam passage through the sample cell can be optimized after introducing the sample cell into the cell holder device.

As a further advantage of the invention, due to the inclined arrangement (arrangement of the sample cell with the angle of incidence such that the normal of at least one of the cell windows deviates from the longitudinal direction of the beam passage) deteriorating effects of the sample cell on the excitation radiation and/or interference effects can be reduced. Accordingly, the cell support body is configured such that the sample cell is arranged in the beam passage with the angle of incidence of the longitudinal direction of the beam passage outside the sample cell relative to the normal of the at least one of the cell windows. In particular, this configuration may be obtained by the provision and geometry of a mechanical support of the sample cell by the cell support body. Preferably, the angle of incidence is set on the irradiation side of the sample cell, i.e., relative to the first window surface of the sample cell hit by the measuring light.

Particularly preferred, the angle of incidence may be selected in a range of +/-15 °, in particular +/- 10 °, around an optimized angle where maximum transmission through the sample cell is obtained. Advantageously, this allows to achieve a practical suppression of multiple reflections at the interfaces in the sample cell. Typically, the optimized angle is the Brewster angle of the cell window relative to an outer space of the sample cell in the cell support body (in particular vacuum or inert gas). The Brewster angle (or: polarization angle) is the angle of incidence at which polarized measuring radiation is perfectly transmitted through a transparent dielectric interface, while reflection is suppressed. Thus, the angle of incidence may be selected in particular in a range of +/-15 ° around the Brewster angle of the cell window relative to the outer space of the sample cell.

Advantageously, the angle of incidence, in particular near the Brewster angle may be selected such that internal back-reflection and/or interference at the sample cell are reduced while achieving improved transmission as compared to normal incidence. In particular, the angle of incidence may be selected such that a power of multiple reflections of measuring radiation within the sample cell is suppressed by a factor of at least 2, in particular at least 3, while the transmission as compared to normal incidence. The angle of incidence can be determined based on equations (9) and (12) described below and/or on the basis of one or multiple calibration measurement(s). Optionally, the angle of incidence can be set by a loop control of the sample cell position and/or orientation based on sensing the transmission through the sample cell.

According to a further preferred embodiment of the invention, the cell windows may be made of at least one infrared transparent material having infrared transparency of at least one of diamond, ZnSe, $CaF_2$, Ge and Si. Particularly preferred, the cell windows may be made of at least one of diamond, ZnSe, $CaF_2$, Ge and Si. Both cell windows may have the same thickness and/or material, or the thicknesses and/or materials of the cell windows may be different from each other.

Particularly preferred, each of the cell windows may have a thickness in a range from 100 $\mu$m, in particular 200 $\mu$m, to 2 mm. Among the above materials, diamond has the following particular advantages. Resulting from it's extreme hardness, it is possible to employ ultra-thin diamond cell window, e.g., with a thickness in a range from 200 $\mu$m to 400 $\mu$m which even work under a vacuum without any deformation effecting the measurement. In addition, the high thermal conductivity of the diamond windows very fast dissipates the heat caused by high power pulse laser (see e.g., [8]), and prevents the sample from any kind of thermal excitation.

Diamond is practically inert to most of the chemicals, therefore, the sample cell is compatible with a broad range of solvents including in particular biological samples. Another notable advantage of diamond cell window is it's transparency over the extremely broad spectral range in near- and mid-infrared as well as the THz frequency ranges. Therefore, sample cells with diamond cell windows are preferred in view of requirements for FRS measurements and is suitable for infrared as well as for THz spectroscopy and takes advantages of the recent development of high power broadband laser system (see [8] to [10]).

The thickness range from 100 $\mu$m, in particular 200 $\mu$m, to 2 mm of diamond windows is preferred as a thickness below 100 $\mu$m may impair the stability and geometric shape of the sample cell, whereas a cell window with a thickness above 2 mm may introduce to much dispersion.

Preferably, the cell windows may be arranged in parallel to each other. Advantageously, the parallel arrangement facilitates the reproducible adjustment of the sample cell relative to the beam path in the measuring apparatus. Alternatively, the cell windows may be arranged inclined relative to each other, e.g., with a preferred inclination angle in a range from 0° to 10°. With this embodiment, interference effects and back-reflections at the sample cell can be further suppressed in an advantageous manner.

Further preferred, a spacer may be arranged between the cell windows, wherein the spacing between the cell windows is set by the spacer. Advantageously, the spacer can be changed easily to prepare the cuvette with different thicknesses of the sample. The spacing between the cell windows may be set by exchanging the spacer by another one among spacers with different thicknesses.

According to a further advantageous embodiment of the invention, the sample cell has a gas-tight configuration. Particularly preferred, the cell windows and/or the support frame of the cell windows are arranged such that the sample cell is gas-tight. In particular, the sample cell is configured such that a pre-vacuum or a high vacuum or an ultra-high vacuum or an inert gas in the container of the measuring apparatus is not impaired by the sample cell. Preferably, the gas-tight configuration may mean that any leakage of vapour from the sample cell to the container device of the measuring apparatus is exclude. Alternatively, a certain leakage of vapour from the sample cell to the container device may be tolerated due to the coupling of the sample receptacle apparatus with the container device, in particular a wall thereof, e.g., if differential pumping is applied in the container.

The stack of a first cell window, the spacer and a second cell windows may be supported and pressurized in a support frame (or: cell frame). According to a further preferred embodiment of the invention, the sample cell may comprise the support frame accommodating the cell windows and the spacer therebetween, wherein the support frame preferably is made of a material having a thermal conductivity like a metal, preferably like copper, aluminium or brass.

Preferably, the sample cell may be configured as a through-flow cell, wherein at least one supply line is connected with the sample cell, particularly preferred with at least one of the cell windows. The sample cell may be connected via the at least one supply line with a sample reservoir and/or a sample collection device. The sample may by supplied to and/or withdrawn from the sample cell via the at least one supply line, preferably via two separate supply lines, e. g., by employing a pumping device. Furthermore, the sample cell may be cleaned with a cleaning medium via the at least one supply line.

Alternatively, the sample cell may be configured as a closed cell without a supply line. With this embodiment, the sample may be supplied to the sample cell under atmospheric conditions by disassembling the support frame, placing the sample on one of the cell windows and reassembling the support frame.

The cell windows are transparent for light with the wavelengths (frequencies) of the sample excitation and the sample response. Preferably, the cell windows may be transparent over a spectral range in near- and mid-infrared as well as the THz frequencies. Broadband transparency covering the whole spectral range may be employed, or the cell windows may be transparent in a spectral interval of interest included the cited spectral range.

According to a further preferred embodiment of the invention, the cell holder device may be provided with a temperature setting device being arranged for targeted setting (adjusting) the temperature of the cell support body. The temperature setting device may be included in the cell holder device and/or coupled with the cell holder device via a heat conducting element. The temperature setting device may include e.g., a resistance heater, a Peltier cooler and/or a temperature setting medium. Particularly preferred, temperature setting is based on water cooling, which has the advantage of being available in the measuring apparatus for cooling the irradiation source.

Particular advantages for adjusting the sample cell relative to the beam path of the measuring apparatus may be obtained with a further preferred embodiment, wherein at least one of the first and second coupling sections is configured for adjusting at least one of a spatial position and orientation of the sample cell relative to the beam path extending through the beam passage, when the cell holder device is coupled with the measuring apparatus. The at least one of the first and second coupling sections, preferably both of the coupling sections, are configured such that the cell support body is movable and adjustable, particularly preferred with an adjustment in all spatial directions (e.g, x, y and z directions) and in relation to the angle of incidence of the beam bath of the measuring apparatus on one of the cell windows of the sample cell.

Particularly preferred, at least one of the first and second coupling sections may include or may be coupled with a bellow, allowing the adjustment movement of the sample receptacle apparatus. Furthermore, at least one adjustment actuator, like an actuator motor or a piezoelectric motor or a manual actuator, may be coupled with the cell holder device for adjusting the cell holder device with the sample cell.

In summary, in particular a closed-cycle flow sample cell is disclosed, which is adapted for investigating samples, in particular bio-fluids, preferably using ultrafast laser spectroscopy. Diamond windows may be used to take full advantage of current broadband laser systems as well as the FRS technique. The sample cell is designed to work in a vacuum environment. To increase the transmissivity and the signal-to-noise ratio, the cell preferably may be designed below the Brewster angle of diamond with respect to the vacuum. The sample cell may feature a small cycle volume of down to less than 5 $\mu$l, adjustable beam path length, and/or compatibility with a large variety of solvents. The construction principle of the sample cell has low complexity, is reliable and versatile. The thickness and material of the cell windows can be easily exchanged to meet different demands of ultrafast spectroscopy.

The features disclosed in conjunction with the sample receptacle apparatus and the embodiments thereof are likewise preferred features of the measuring apparatus or the embodiments thereof and/or the method for the spectroscopic investigation of the sample or the embodiments thereof. The above-mentioned aspects and preferred features according to the invention, in particular with regard to the sample receptacle apparatus, therefore also apply to the measuring apparatus and the components thereof and to the spectroscopic method.

Brief description of the drawings

Further details and advantages of the invention are described in the following with reference to the attached drawings, which schematically show in:

Figure 1: a cross-section view of a sample receptacle apparatus according to preferred embodiments of the invention;

Figure 2: features of a measuring apparatus according to preferred embodiments of the invention;

Figure 3: further details of a sample cell included in the sample receptacle apparatus;

Figure 4: an illustration of a beam path through a sample cell; and

Figures 5 to 8: graphical illustrations of the transmission of light through the sample cell.

Preferred embodiments of the invention

Features of preferred embodiments of the invention are described in the following with exemplary reference to a through-flow sample cell made of cell windows and a spacer in a support frame, adapted for an FSR measurement. It is emphasized that the invention is not limited to this feature combination, but rather can be implemented with a modified sample cell design, with modified geometric or material features and/or with another spectroscopic measurement, e.g., an FTIR measurement. Details of the FSR or FTIR measurements are not described as they are known per se from prior art.

Exemplary reference is made to an evacuated measuring apparatus, wherein the sample cell is arranged in an evacuated space. The invention is not restricted to this embodiment but rather can be applied correspondingly with an inert gas included in the measuring apparatus.

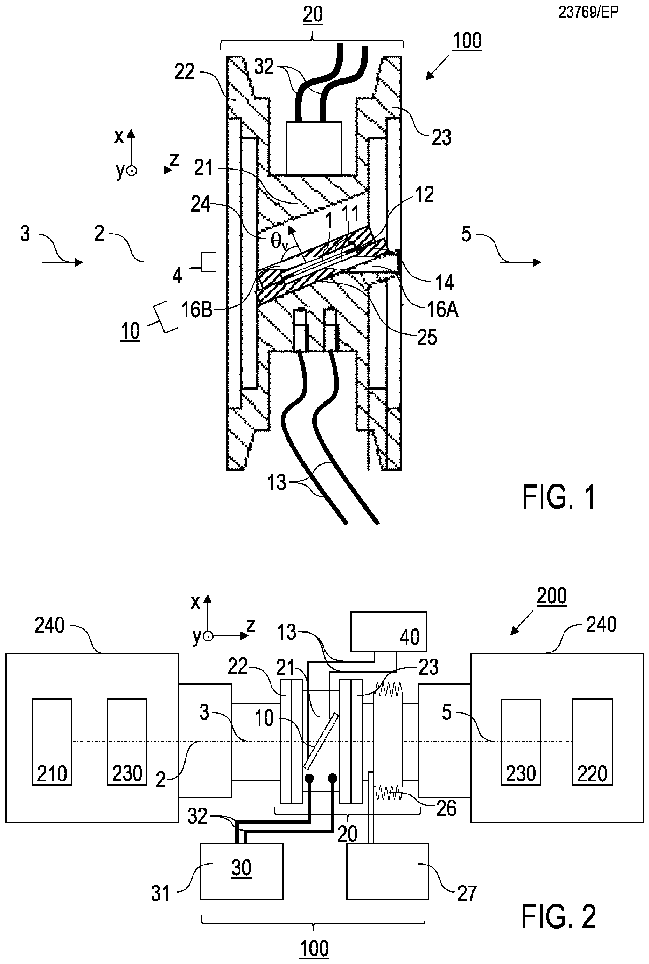

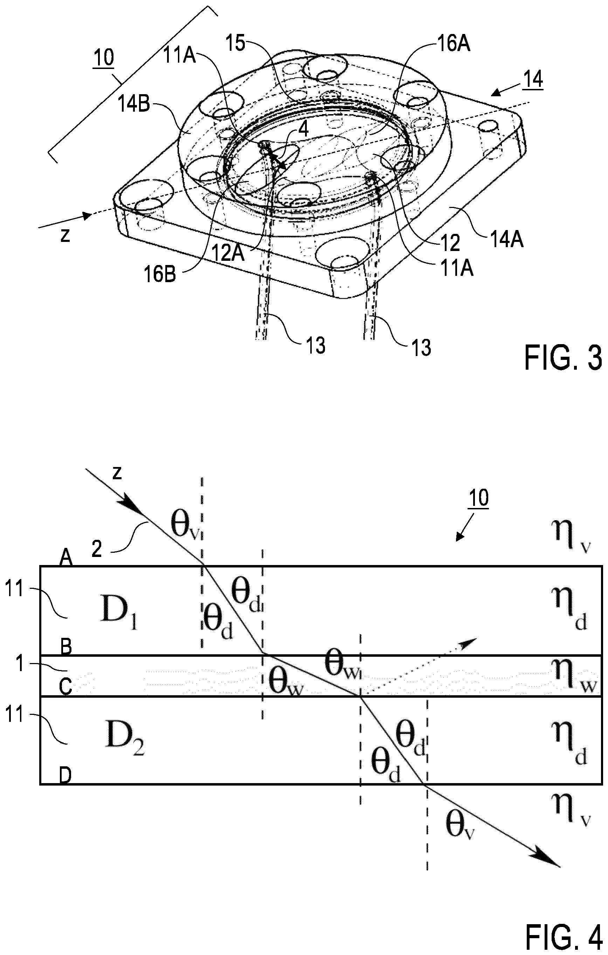

Figures 1 and 2 illustrate the sample receptacle apparatus 100 and the measuring apparatus 200 according to preferred embodiments of the invention, and Figure 3 illustrates details of the sample cell 10 included in the sample receptacle apparatus 100. In the present specification, reference is made to spatial coordinates x, y and z, wherein the longitudinal direction of the sample receptacle apparatus 100, in particular the longitudinal direction of the cell holder device 20 thereof, is indicated as the z-direction and the first and second coupling sections 22, 23 of the cell holder device 20 preferably extend in an x-y-plane perpendicular to the z-axis.

The sample receptacle apparatus 100 comprises the sample cell 10, the cell holder device 20 and the temperature setting device 30 (see Figures 1 to 3). The measuring apparatus 200 comprises the irradiation source device 210 for creating measuring radiation 3, the optical set-up 230 with at least one optical element, like at least one lens and/or at least one mirror, directing the measuring radiation 3 along the beam path 2 for irradiating the sample 1 to be investigated in the sample cell 10 and for directing a sample radiation 5 from the sample 1 in the sample cell 10 to the detector device 220, the sample receptacle apparatus 100, and the closed, in particular evacuable container device 240 for accommodating the irradiation source device 210, the optical set-up 230 and the detector device 220 in a specific gas or vacuum environment. The irradiation source device 210, the optical set-up 230 and the detector device 220 may be configured as it is known per se for FSR measurements, e.g. as described in [3] to [5].

The cell holder device 20 provides the beam passage 4 along the longitudinal direction z through the first coupling section 22, the sample cell 10 and the second coupling section 23. The beam path 2 of the measuring radiation 3 extends through the beam passage 4 (see Figure 1).

The sample cell 10 comprises two plane, plate-shaped circular cell windows 11 and a ring-shaped spacer 12 therebetween. With the illustrated example, each of the cell windows 11 has a diameter of 15 mm and is made of diamond with a thickness of 300 $\mu$m (manufacturer: Diamond Materials GmbH, Germany). One of the cell windows 11 has two holes 11A for coupling supply lines 13 with the sample cell 10 (see Figure 3). The two supply lines 13 are connected with a sample reservoir 40 (and/or a sample collection device), and they comprise e.g. approximately 20 cm long biocompatible microfluidics tubes with 800 $\mu$m outer diameter and 130 $\mu$m inner diameter.

The holes 11A are made with a diameter of 800 $\mu$m and with a center to center distance of 10.8 mm. The supply lines 13 are made of a polymer material, e.g. PEEK, and they are glued to the holes 11A, e.g., using two-component epoxy glue. Advantageously, with well fitting of the supply lines 13 no leakage occurs at the coupling of the supply lines 13. For an additional precaution, the supply lines 13 additionally may be fixed by gluing to a support frame 14 (see below) of the sample cell 10. The glue also protects the supply lines 13 from overpressure damage due to sample delivery by a pumping device, like a microfluidic pump, of the sample reservoir 40 (and/or the sample collection device).

The spacer 12 is made of e.g., biaxially-oriented polyethylene terephthalate (BoPET) with a thickness selected for setting the spacing between the cell windows 11. The thickness is e.g., 20 $\mu$m, but can be varied in a range from 3 $\mu$m to 1 mm. Employing BoPET has advantages as it is compatible in particular with biological samples as well as suitable for several non-biological solvents. The spacer 12 is round in shape with a diameter of e.g., 15 mm and a spacer channel 12A made in the middle, as shown in Figure 3. The spacer 12 is placed in between two cell windows 11, such that the spacer channel 12A connects both the holes 11A of the cell window 11 (see Figure 3).

The stack of the cell windows 11 and the spacer 12 is placed inside the support frame 14 (shown with further details in Figure 3), which additionally is used for coupling the sample cell 10 with the cell holder device 20, in particular the cell support body 21 thereof. The support frame 14 comprises a plane lower frame plate 14A and a plane upper frame plate 14B. The lower frame plate 14A has a rectangular shape, and it is coupled via screws with the cell support body 21. The upper frame plate 14B has a circular shape, and it is coupled via screws with the lower frame plate 14A.

For accommodating the cell windows 11 and the spacer 12, the upper and lower frame plates 14A, 14B has circular recesses 15 on their inner surfaces facing to each other. Additionally, at least one O-ring (not shown) may be provided between the recesses 15 to improve the pressure-tightness of the sample cell 10 and to protect the cell windows 11 from damage.

The upper and lower frame plates 14A, 14B are solid metal plates, being made of e.g., aluminium or brass with a thickness in a range from 2 mm to 4 mm. For opening the beam passage 4 through the sample cell 10, the upper frame plate 14A has an upper channel 16A and the lower frame plate 14B has a lower channel 16B. The upper and lower channels 16A, 16B are inclined with a channel angle relative to the normal of the upper and lower frame plates 14A, 14B (see Figure 1). The channel angle substantially is equal to the angle of incidence $\theta_v$ to be set at the sample cell 10, in particular the cell windows 11 thereof (see below).

The diameter of the upper and lower channels 16A, 16B is at least equal to the diameter of the beam of measuring radiation 3 (e.g., up to 3 mm, see Figure 1). Preferably, the diameter of the upper and lower channels 16A, 16B is selected such that the measuring radiation 3 is not blocked by the upper and lower frame plates 14A, 14B even in case of a tilting of the whole sample receptacle apparatus 100 for adjusting the angle of incidence, as mentioned below. With preferred examples, the diameter of the upper and lower channels 16A, 16B is selected in a range from 2 mm to 4 mm.

Preferred measurement conditions for FRS are achieved under vacuum, as this avoids a disturbing influence of molecular vibration modes of gas molecules, thus facilitating a measurement without interfering with background signals. Therefore, in order to achieve the best possible results, the sample receptacle apparatus 100 preferably includes the vacuum-compatible sample cell 10 and the cell holder device 20. To provide vacuum compatibility, the cell holder device 20 is preferably made by a single piece of metal, e.g., aluminium or brass, where the sample cell 10 is attached at an angle relative to the z-direction near to or equal Brewster's angle (see below, Figures 4 to 7).

The cell holder device 20 comprises the evacuable cell support body 21, the first coupling section 22 and the second coupling section 23. The cell support body 21 is made in cylindrical form with an inner space 24 for accommodating and fixing the sample cell 10, as shown with the cross-sectional cut of the assembly in Figure 1. A plane support platform 25 is provided in the inner space 24 for positioning the sample cell 10 in thermal contact with the cell support body 21.

In particular for continuous measurements, it is preferred to remove heat from the cell support body 21. The cell holder device 20 is provided with the temperature setting device 30 (see Figure 2), including a temperature setting medium reservoir 31 with a circulation pumping device and two tubes 32 guiding temperature setting medium to and from the cell support body 21. The temperature setting medium reservoir 31 may be adapted for providing the temperature setting medium at a predetermined temperature. A control circuit (not shown) may be provided, including a temperature sensor in the temperature setting medium reservoir 31 and/or in the cell support body 21, so that the temperature of the temperature setting medium may be controlled in dependency on a currently sensed temperature.

To achieve thermal stabilization, the cell support body 21 preferably is provided with water cooling. The tubes 32 with an outer diameter of e.g. 4 mm are connected with an inner line within the cell support body 21 via push-in-fittings, e.g. pneumatic tube connectors (manufacturer, FESTO, USA). Since the support frame 14 is connected with the cell support body 21, water cooling effectively cools down the sample cell 10 indirectly.

The first and second coupling sections 22, 23 comprise gas-tight, in particular vacuum flanges, e.g. KF50 flanges. When the sample cell 10 is placed in a vacuum or otherwise closed environment, it may be difficult to adjust the beam path 2 and the sample cell 10 relative to each other. Adjustment may be obtained by adjusting the optical set-up 230. Alternatively, according to a preferred embodiment of the invention, the adjustment may be obtained by employing adjustable coupling sections 22, 23 and/or at least one bellow 26 (see Figure 2). A five-axis pneumatic stage 27 including three linear (x-y-z axis), and two rotational degrees of freedom is coupled with the adjustable coupling sections 22, 23 and/or the at least one bellow 26.

In practice, one single bellow 26 may be sufficient, if the distal vacuum flange (e.g., 22) provides sufficient flexibility. Alternatively, each of the first and second coupling sections 22, 23 may be provided with a separate bellow, or one or both of the first and second coupling sections 22, 23 may be configured as bellows.

For a spectroscopic investigation of a sample 1, the following steps are executed. Firstly, the sample cell 10 is assembled and placed in the cell holder device 20. The cell holder device 20 is coupled with the container device 240, followed by an evacuation of (or inert gas introduction into) the container device 240 and the cell holder device 20. The optical set-up 230 is adjusted by setting the cell holder device 20 relative to the beam path 2, wherein the pneumatic stage 27 is used.

The angle of incidence of the measurement radiation 3 at the sample cell 10 can be determined based on the analytical evaluation outlined below, and/or based on at least one calibration measurement. For the calibration measurement, portions of the measurement radiation 3 reflected and transmitted at the sample cell 10 can be sensed with sensors (not shown), and the angle of incidence can be set such that the reflections are suppressed and the transmission is increased compared with the transmission through the cell with normal incidence.

The sample 1 is supplied to the sample cell 10 via the supply lines 13. If the angle of incidence is set with the calibration measurement, the sample 1 is introduced before the calibration measurement. Subsequently, the sample 1 is irradiated with the measuring radiation 3, and sample radiation 5 resulting from an interaction of the measuring radiation 3 with the sample 1 is detected as it is known per se from FSR measurements.

In the following, the analytical evaluation of the angle of incidence is described with reference to Figures 4 to 7. Figure 4 is a schematic of the cell windows 11 of the sample cell 10 with the beam path 2. The sample cell 10 is designed to work in vacuum, therefore the outer surface of the cell windows 11 are in vacuum and denoted as "v". Sample 1 in this case is water and denoted as "w". The cell windows 11 are denoted as "D1" and "D2" in the following. The interfaces along the beam path 2 are denoted with A, B, C and D. The following analytical evaluation is equally valid with embodiments wherein the vacuum is replaced by an inert gas, like Ne or Ar.

In principle, it is possible to eliminate the back reflection completely if the beam hits the sample-diamond interface "C" at Brewster's angle. According to the Snell's law,

$$\eta_w \sin\theta_w = \eta_d \sin\theta_d \qquad (1)$$

where $\eta_w$ and $\eta_d$ are the refractive index of water and diamond, respectively. In the same way, the angles of the ray inside the water and diamond are denoted as $\theta_w$ and $\theta_d$, respectively. At Brewster angle

$$\theta_w + \theta_d = 90^\circ \qquad (2)$$

Based on eq. (1) and eq. (2), the following relations are obtained

$$\eta_w \sin\theta_w = \eta_d \sin(90 - \theta_w)$$

$$\tan\theta_w = \frac{\eta_d}{\eta_w}$$

$$\theta_w = \tan^{-1}\left(\frac{\eta_d}{\eta_w}\right) \qquad (3)$$

The refractive index of water is very complex and it varies non-linearly with the wavelength of light (see [12]). From 6 $\mu$m to 10 $\mu$m wavelength, the refractive index of water varies from 1.36 to 1.25. The mean value of the refractive index of water is considered here as 1.3. In comparison, diamond has a homogeneous refractive index between 2 $\mu$m to 10 $\mu$m, which is 2.4. Using these two values of refractive index in eq. 3, the Brewster angle of diamond relative to water is 61.6°. Therefore, $\theta_d$ is 28.4°.

However, for $\theta_d$ = 28.4°, the angle of incidence (angle of departure) at the last interface between diamond and vacuum/air (interface D) exceeds the value of critical angle (24.6°), therefore, a total reflection will take place and light will not transmit through the sample cell 10. To avoid this situation, an angle lower than the Brewster angle at the last interface may be selected and optimized such that back-reflection can be suppressed significantly and separated from the main transmitted beam as far as possible.

To find the optimal angle of incidence, the transmission through the sample cell 10 is optimized. In the sample cell 10, light energy travels through four boundaries A, B, C and D, and at each boundary, some of the light energy will be lost due to the reflection to that boundary. With the light energy traveling through water and incident on the interface between water and diamond (interface C). The reflectance of s- and p-polarized light at the interface are written respectively

$$R_s = \left( \frac{\eta_w \cos\theta_w - \eta_d \cos\theta_d}{\eta_w \cos\theta_w + \eta_d \cos\theta_d} \right)^2$$

$$R_p = \left( \frac{\eta_d \cos\theta_d - \eta_w \cos\theta_w}{\eta_d \cos\theta_d + \eta_w \cos\theta_w} \right)^2$$

(4), (5)

Using Snell's law, above equations become

$$R_s = \left( \frac{\eta_w \cos\theta_w - \eta_d \sqrt{1 - \left(\frac{\eta_w}{\eta_d}\sin\theta_w\right)^2}}{\eta_w \cos\theta_w + \eta_d \sqrt{1 - \left(\frac{\eta_w}{\eta_d}\sin\theta_w\right)^2}} \right)^2$$

(6)

$$R_p = \left( \frac{\eta_w \sqrt{1 - \left(\frac{\eta_w}{\eta_d}\sin\theta_w\right)^2} - \eta_d \cos\theta_w}{\eta_w \sqrt{1 - \left(\frac{\eta_w}{\eta_d}\sin\theta_w\right)^2} + \eta_d \cos\theta_w} \right)^2$$

(7)

Neglecting the absorption of light energy in the medium, the transmittance of the s- and p-polarized light through an interface would be $T_s$ = 1 - $R_s$ and $T_p$ = 1 - $R_p$ respectively.

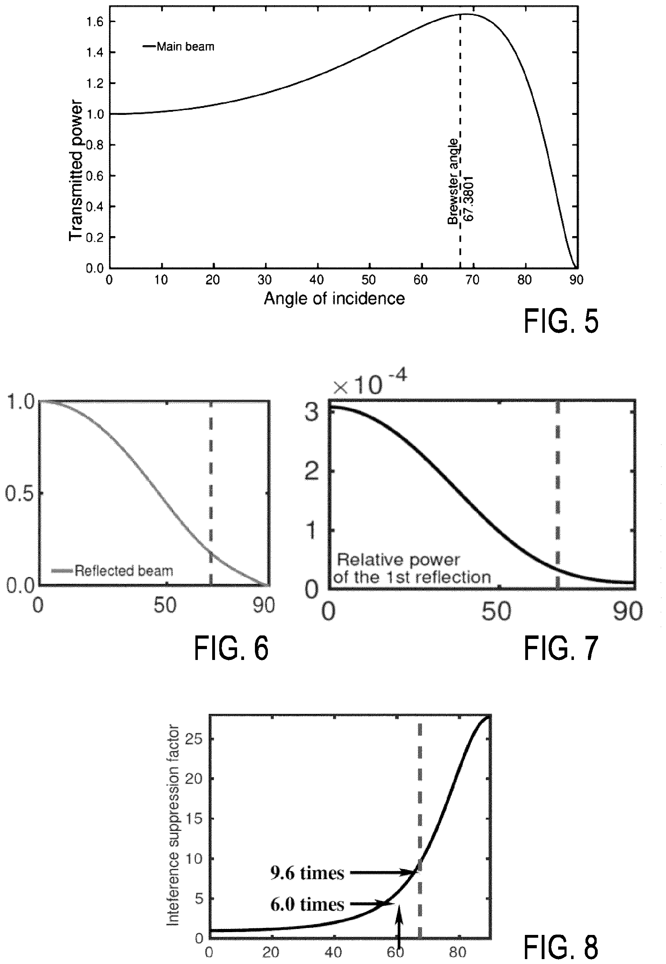

Figure 5 illustrates the relative transmission of light (relative to normal incidence) at 8 $\mu$m wavelength through the sample cell 10. Figure 6 is a curve representing the relative transmitted power of the first reflection at sample-diamond interface ("C") relative to normal incidence, Figure 7 is a curve representing the relative power of the first reflection relative to the total transmission, and Figure 8 illustrates the suppression factor of the interference energy with respect to normal incidence. The curve in Figure 5 shows that if the cell is placed at Brewster's angle of the air-diamond interface "A", then transmitted power will be increased by 60%. It is a significant improvement of the power transmission. However, it is preferred to suppress the transmission of the back reflection at C. Figure 6 shows that the transmitted power of the reflected beam with respect to the incident angle is dropped by 80%.

Using eq. (7) the transmission of light at the interface "C" is obtained according to

$$T_p^3(\theta_w^d) = 1 - \left(\frac{\eta_w \sqrt{1 - \left(\frac{\eta_w}{\eta_d} \sin \theta_w^d\right)^2} - \eta_d \cos \theta_w^d}{\eta_w \sqrt{1 - \left(\frac{\eta_w}{\eta_d} \sin \theta_w^d\right)^2} + \eta_d \cos \theta_w^d}\right)^2 \quad (8)$$

From now to specify the beam direction, the angle is defined as $\theta_w^d$. In this case, it indicates that light is traveling from water to diamond at interface "C".

Correspondingly, transmission $T_p^1(\theta_v^d)$, $T_p^2(\theta_d^w)$ and $T_p^4(\theta_d^v)$ at the other interfaces "A", "B", and "D", respectively, can be calculated. To be noted here that $\theta_v^d$ is the incident angle of light to the sample cell 10 at interface "A", all other angles should be calculated according to Snell's law (eq. (1)).

In case of a normal incident, eq. (8) becomes

$$T_p^3(0) = 1 - \left(\frac{\eta_w - \eta_d}{\eta_w + \eta_d}\right)^2$$
$$= 4\frac{\eta_w \eta_d}{(\eta_w + \eta_d)^2} \quad (9)$$

Similarly, the transmission at all other interfaces can be calculated for the normal incident of light. To calculate the total transmission through the sample cell 10 the absorption of light energy by the sample 1 in the sample cell 10 is considered. According to Beer's absorption law, the transmitted light intensity is $I = I_0 e^{-\alpha x}$, where $I_0$ is the intensity before the sample layer, $\alpha$ is the absorption coefficient of the sample and x is the sample thickness in the case of normal incident of light. For any other angle, it is calculated with the formula $X = x/\cos\theta_w$.

When light travels to a denser medium, only at Brewster's angle there is total transmission of light energy, for any other angle, some of the light reflected back to the medium. Let's consider the first reflection at the interface "C", denoted as a dotted arrow in Figure 4. This reflected light energy will be reflected again at interface "B" and part of the energy is then transmitted through the cell. The reflected energy can be calculated by eq. (7). Now considering the transmission at all interfaces, the total transmission of light for the main beam is

$$E_t = T_p^1(\theta_v^d)T_p^2(\theta_d^w)I_0 e^{-\alpha X}T_p^3(\theta_w^d)T_p^4(\theta_d^v) \quad (10)$$

The energy of the first reflected beam will be

$$E_r = T_p^1(\theta_v^d)T_p^2(\theta_d^w)R_p^3(\theta_w^d)R_p^2(\theta_w^d)$$
$$(1 - (1 - I_0 e^{-\alpha X})e^{-\alpha X})e^{-\alpha X}$$
$$T_p^3(\theta_w^d)T_p^4(\theta_d^v) \quad (11)$$

Suppression factor is

$$S = \frac{E_r(\theta=0)}{E_t(\theta=0)} \bigg/ \frac{E_r(\theta)}{E_t(\theta)}$$

where $E_r$ stands for energy transmitted due to first reflection and $E_t$ is transmitted energy of the main beam.

$$S \propto \cfrac{\cfrac{T_p^1(0)T_p^2(0)R_p^3(0)R_p^{r2}(0)A_r(0)T_p^{r3}(0)T_p^{r4}(0)}{T_p^1(0)T_p^2(0)A_t(0)T_p^3(0)T_p^4(0)}}{\cfrac{T_p^1 T_p^2 R_p^3 R_p^{r2} A_r T_p^{r3} T_p^{r4}}{T_p^1 T_p^2 A_t T_p^3 T_p^4}} \qquad (12)$$

$$\propto \cfrac{\left(\cfrac{\eta_w - \eta_d}{\eta_w + \eta_d}\right)^4}{\left(\cfrac{\eta_w \sqrt{1 - \left(\cfrac{\eta_w}{\eta_d}\sin\theta_w\right)^2} - \eta_d\cos\theta_w}{\eta_w \sqrt{1 - \left(\cfrac{\eta_w}{\eta_d}\sin\theta_w\right)^2} + \eta_d\cos\theta_w}\right)^4} \qquad (13)$$

The suppression factor is plotted in relation to the angle of incidence and presented in Figure 8. Accordingly, about 10 times suppression of interference energy is achieved when cell is prepared at an angle of incidence of 67°.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the sub claims independently of the features and claims to which they refer.

## Claims

1. Sample receptacle apparatus (100), being configured for arranging a fluid sample (1) in a beam path (2) of measuring radiation (3) in a gas-tight measuring apparatus (200), comprising

   - a sample cell (10) having plane, plate-shaped cell windows (11) with a spacing therebetween, wherein the sample cell (10) is configured for accommodating the sample (1) in the spacing between the cell windows (11), **characterized by**
   - a cell holder device (20) having a cell support body (21), a first coupling section (22) and a second coupling section (23), wherein
   - the cell support body (21) is configured for accommodating the sample cell (10) and for setting a temperature of the sample cell (10),
   - the first and second coupling sections (22, 23) are configured for a gas-tight coupling of the cell holder device (20) with a closed container device (240) of the measuring apparatus (200), and
   - the cell holder device (20) provides a beam passage (4) along a longitudinal direction (z) through the first coupling section (22), the cell support body (21) with the sample cell (10), and the second coupling section (23), wherein the sample cell (10) is arranged in the beam passage (4) such that a normal of at least one of the cell windows (11) deviates from the longitudinal direction (z) of the beam passage (4).

2. Sample receptacle apparatus according to claim 1,

   - the angle of incidence is selected such that internal back-reflection and/or interference at the sample cell (10) are reduced while achieving improved transmission as compared to normal incidence.

3. Sample receptacle apparatus according to one of the foregoing claims, wherein

   - the cell windows (11) are made of at least one infrared transparent material having infrared transparency of at least one of diamond, ZnSe, $CaF_2$, Ge and Si.

4. Sample receptacle apparatus according to one of the foregoing claims, wherein

   - each of the cell windows (11) has a thickness in a range from 100 μm, in particular 200 μm, to 2 mm.

5. Sample receptacle apparatus according to one of the foregoing claims, wherein

   - each of the cell windows (11) is made of diamond with a thickness in a range from 100 μm to 500 μm.

6. Sample receptacle apparatus according to one of the foregoing claims, wherein

   - a spacer (12) is arranged between the cell windows (11), wherein the spacing is set by the spacer (12).

7. Sample receptacle apparatus according to one of the foregoing claims, wherein the sample cell (10) has at least one of the following features

   - the cell windows (11) are arranged in parallel,
   - the sample cell (10) is a through-flow cell, wherein at least one supply line (13) is connected with the sample cell (10), and
   - the cell windows (11) are transparent over a spectral range in near- and mid-infrared as well as the THz frequencies.

8. Sample receptacle apparatus according to one of the foregoing claims, wherein

   - the sample cell (10) has a gas-tight configuration.

9. Sample receptacle apparatus according to one of the foregoing claims, wherein

   - the cell holder device (20) is provided with a temperature setting device (30) being arranged for setting the temperature of the cell support body (21).

10. Sample receptacle apparatus according to one of the foregoing claims, wherein

    - the sample cell (10) comprises a support frame (14) accommodating the cell windows (11) and a spacer (12) therebetween, wherein
    - the support frame (14) is made of a material having a thermal conductivity like a metal, preferably like copper or brass.

11. Sample receptacle apparatus according to one of the foregoing claims, wherein

    - at least one of the first and second coupling sections (22, 23) is configured for adjusting at least one of a spatial position and orientation of the sample cell (10) relative to the beam path (2) extending through the beam passage (4), when the cell holder device (20) is coupled with the measuring apparatus (200).

12. Measuring apparatus (200), being configured for a spectroscopic investigation of a sample (1), comprising

    - an irradiation source device (210) being arranged for creating measuring radiation (3),
    - a detector device (220) being arranged for detecting sample radiation (5) resulting from an interaction of the measuring radiation (3) with the sample (1) to be investigated,
    - an optical set-up (230) including a plurality of optical elements spanning a beam path (2) from the irradiation source device (210) to the detector device (220),
    - a closed container device (240) being arranged for accommodating at least the optical set-up (230) in gas-tight manner, and
    - the sample receptacle apparatus (100) according to one of the foregoing claims, wherein
    - the sample receptacle apparatus (100) is coupled with the closed container device (240) such that the measuring radiation (3) is capable of irradiating the sample (1) in the sample cell (10) and the detector device (220) is capable of collecting the sample radiation (5).

13. Measuring apparatus according to claim 12, wherein

- the sample cell (10) is arranged with an angle of incidence of the longitudinal direction of the beam passage outside the sample cell (10) relative to a normal of the at least one of the cell windows, wherein the angle of incidence is selected in a range of +/-15 ° around an optimized angle where maximum transmission through the sample cell is obtained.

14. Spectroscopic measuring method for a spectroscopic investigation of a sample (1), wherein the measuring apparatus (200) according to claim 12 or 13 is used, including the sample receptacle apparatus (100) according to one of the claims 1 to 11, comprising the steps of

- providing the sample (1) in the sample cell (10) of the sample receptacle apparatus (100),
- irradiating the sample (1) with measuring radiation (3), and
- detecting the sample radiation (3) resulting from an interaction of the measuring radiation (3) with the sample (1).

15. Spectroscopic measuring method according claim 14, including a step of

- adjusting the longitudinal direction (z) of the beam passage (4) of the cell holder device (20) relative to the beam path (2) extending through the beam passage (4).

23769/EP

FIG. 1

FIG. 2

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

**Application Number**

EP 24 15 1398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 108 937 B1 (SICK MAIHAK GMBH [DE]) 7 April 2010 (2010-04-07) * paragraphs [0011], [0013], [0014], [0021], [0022], [0024] – [0026]; figure 1 * | 1,2,7,8, 12-15 | INV. G01N21/03 G01N21/05 |
| X | US 2006/044554 A1 (MERTZ EDWARD L [US] ET AL) 2 March 2006 (2006-03-02) * paragraphs [0032] – [0034], [0047] – [0054]; figures 1,4 * | 1-12,14 | ADD. G01N21/17 G01N21/21 G01N21/3504 G01N21/3577 G01N21/3581 G01N21/359 G01N21/35 |
| Y | | 13,15 | |
| Y | JP 6 195947 B2 (AXETRIS AG) 13 September 2017 (2017-09-13) * paragraph [0005]; figure 1 * | 13,15 | |
| A | | 1,2,7,11 | |
| A | US 2004/207852 A1 (BECHTEL KATE L [US] ET AL) 21 October 2004 (2004-10-21) * paragraphs [0033], [0060]; figures 2,3,7 * | 1,2,6,7, 11,13,15 | |

**TECHNICAL FIELDS SEARCHED (IPC)**

G01N

The present search report has been drawn up for all claims

| Place of search | Date of completion of the search | Examiner |
|---|---|---|
| Munich | 10 May 2024 | Weinberger, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

EP 4 585 905 A1

## ANNEX TO THE EUROPEAN SEARCH REPORT
## ON EUROPEAN PATENT APPLICATION NO.

EP 24 15 1398

10-05-2024

| Patent document cited in search report | | Publication date | Patent family member(s) | | Publication date |
|---|---|---|---|---|---|
| EP 2108937 | B1 | 07-04-2010 | AT | E463734 T1 | 15-04-2010 |
| | | | EP | 2108937 A1 | 14-10-2009 |
| US 2006044554 | A1 | 02-03-2006 | EP | 1784632 A1 | 16-05-2007 |
| | | | US | 2006044554 A1 | 02-03-2006 |
| | | | WO | 2006026342 A1 | 09-03-2006 |
| JP 6195947 | B2 | 13-09-2017 | CN | 105842192 A | 10-08-2016 |
| | | | EP | 3054280 A1 | 10-08-2016 |
| | | | JP | 6195947 B2 | 13-09-2017 |
| | | | JP | 2016142738 A | 08-08-2016 |
| US 2004207852 | A1 | 21-10-2004 | US | 2004207852 A1 | 21-10-2004 |
| | | | WO | 2005024399 A2 | 17-03-2005 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200033259 A1
- US 20180003623 A1
- US 20190056312 A1
- WO 2004036193 A1

### Non-patent literature cited in the description

- **A. APOLONSKI et al.** Towards a standard operating procedure for revealing hidden volatile organic compounds in breath: the Fourier-transform IR spectroscopy case. *Appl. Opt.*, May 2021, vol. 60 (14), 4217-4224
- **H. YANG et al.** Obtaining information about protein secondary structures in aqueous solution using Fourier transform IR spectroscopy. *Nat Protoc.*, 2015, vol. 10 (3), 382-396
- **I. PUPEZA et al.** Field-resolved infrared spectroscopy of biological systems. *Nature*, 2020, vol. 577, 52-59
- **T. P. BUTLER et al.** Watt-scale 50-MHz source of single-cycle waveform-stable pulses in the molecular fingerprint region. *Opt. Lett.*, April 2019, vol. 44 (7), 1730-1733
- **T. P. BUTLER et al.** Multi-octave spanning, watt-level ultrafast midinfrared source. *Journal of Physics: Photonics*, October 2019, vol. 1 (4), 044006
- **J. XU et al.** Three-octave terahertz pulses from optical rectification of 20 fs, 1 $\mu$m, 78 MHz pulses in GaP. *Journal of Physics B: Atomic, Molecular and Optical Physics*, July 2018, vol. 51 (15), 154002
- **K. S. MAITI**. Broadband two dimensional infrared spectroscopy of cyclic amide 2-pyrrolidinone. *Phys. Chem. Chem. Phys.*, 2015, vol. 17, 24998-25003
- **D. J. ROWE et al.** Complex refractive index spectra of whole blood and aqueous solutions of anticoagulants, analgesics and buffers in the mid-infrared. *Sci. Rep*, 2017, vol. 7, 7356
- **M. HUBER et al.** Optimum sample thickness for trace analyte detection with field-resolved infrared spectroscopy. *Analytical Chemistry*, 2020, vol. 92 (11), 7508-7514